# EUROPEAN PATENT SPECIFICATION

(11) **EP 4 343 922 B1**
(45) Date of publication and mention of the grant of the patent: **05.11.2025**
(21) Application number: 22946028.2
(22) Date of filing: 23.12.2022
(51) Int. Cl.: F28F 3/12, F28F 3/04, H01M 10/613, H01M 10/6557, H01M 10/6568, F28F 21/08, F28D 1/03, F28D 1/04, H01M 10/625, H01M 10/647, H01M 10/6556, F28D 21/00, H01M 10/6567

(54) **LIQUID COOLING PLATE AND BATTERY PACK**
FLÜSSIGKEITSKÜHLPLATTE UND BATTERIEPACK
PLAQUE DE REFROIDISSEMENT DE LIQUIDE ET BLOC-BATTERIE

(30) Priority: 29.07.2022 CN 202221999891 U
(43) Date of publication of application: 27.03.2024
(73) Proprietor: Hithium Tech HK Limited, Hong Kong (HK)
(72) Inventor: HUANG, Weipeng, Xiamen, Fujian 361100 (CN); WU, Changfeng, Xiamen, Fujian 361100 (CN); JING, Xiaoxiao, Xiamen, Fujian 361100 (CN)
(74) Representative: RGTH
(86) International application number: PCT/CN2022/141649
(87) International publication number: WO 2024/021481

(56) References cited:
- EP-B1- 3 753 065
- CN-A- 112 259 822
- CN-A- 113 471 604
- CN-A- 113 471 604
- CN-A- 114 267 901
- CN-U- 208 315 712
- CN-U- 208 315 712
- CN-U- 217 848 100
- CN-U- 218 101 432
- US-A1- 2017 176 108

## Description

### TECHNICAL FIELD

The present disclosure relates to the field of battery cooling technology, and specifically to a liquid cooling plate and a battery pack.

### BACKGROUND

An independent battery module usually contains multiple cells. During the charging and discharging process of the battery module, the chemical reactions of the multiple cells inside the battery module will generate a large amount of heat. Currently, a liquid cooling plate is often used to perform heat exchange with the battery module. However, at present, a battery pack is usually composed of multiple battery modules so as to form a high-power battery, and when the liquid cooling plate is used to perform heat exchange with the multiple battery modules, the structure will be complex, and the efficiency of the heat exchange between the liquid cooling plate and the battery modules is low. Therefore, how to improve the heat exchange efficiency between the liquid cooling plate and multiple battery modules becomes an urgent problem that needs to be solved.

US2017176108A1 provides a heat exchanger for a battery, the heat exchanger having a length and a width, comprising a plurality of fluid-carrying panels and defining a multi-sided enclosure for enclosing at least two sides of the battery The heat exchanger comprises a first fluid-carrying panel defining a first flow channel extending along the length of the heat exchanger, the first fluid-carrying panel having a width; and a second fluid-carrying panel defining a second flow channel extending along the length of the heat exchanger, the second fluid-carrying panel having a width, wherein the first and second fluid-carrying panels are arranged at an angle to another.

EP3753065B1 provides a cooling system for a module for storing electrical energy, the system comprising: a housing arranged so as to receive an electrical energy storage module comprising at least one battery cell, the housing comprising a bottom face and at least one side face which is, in particular, substantially perpendicular to the bottom face; an inner heat-transfer fluid circuit; a fluid connection arranged so as to connect the inner heat-transfer fluid circuit to a heat-transfer fluid circuit external to the cooling system; and a structural body arranged so as to carry out a mechanical function, the structural body being different from the cooling plates.

CN 113471604A provides a power battery pack, which comprises a battery tray and a box cover, a plurality of first battery modules and a plurality of second battery modules are mounted in a containing space defined by the battery tray and the box cover, a liquid cooling system is arranged in the containing space, and comprises a plurality of liquid cooling plates, the liquid cooling plates are of U-shaped structures, the outer side faces of the first battery modules are sleeved with the liquid cooling plates respectively, one face of each liquid cooling plate is attached to the side face of the corresponding second battery module, the two free ends of each liquid cooling plate are connected with a liquid inlet pipe and a liquid outlet pipe respectively, and the liquid inlet pipes and the liquid outlet pipes are connected in parallel through liquid cooling pipe heads respectively.

CN208315712U provides a liquid cooling device applied to a battery module, the liquid cooling device includes a liquid cooling plate including multiple spaced U-shaped heat dissipation structures, which include a first liquid cooling area, a second liquid cooling area, and a third liquid cooling area. The first liquid cooling area and the third liquid cooling area are arranged in parallel, and the two ends of the second liquid cooling area are respectively connected to the ends of the first liquid cooling area and the third liquid cooling area located at the same end. The liquid cooling plate further comprises a fourth liquid cooling area, and adjacent ends of two adjacent U-shaped heat dissipation structures are respectively connected to the two ends of the fourth liquid cooling area.

### SUMMARY

The present invention provides a liquid cooling plate according to independent claim 1 and a battery pack, which are at least aimed to solve the problem of low heat exchange efficiency between the liquid cooling plate and multiple battery modules.

A liquid cooling plate provided by the present disclosure is formed with a receiving space, and includes a first cooling plate and a second cooling plate. The second cooling plate is stacked on a side of the first cooling plate facing the receiving space and is connected to the first cooling plate in a sealed manner, and a cooling flow passage surrounding the receiving space is formed between the second cooling plate and the first cooling plate.

The first cooling plate includes a first body and a first flow passage provided in the first body. The first flow passage extends in a length direction of the first body and is recessed from the first body in a direction away from the receiving space.

The second cooling plate includes a second body and a second flow passage provided in the second body, and the second body is stacked on a side of the first body facing the receiving space, the second flow passage extends in the length direction of the second body and is recessed from the second body in a direction towards the receiving space.

In a case where the first body of the first cooling plate the first body of the first cooling plate is provided with the first flow passage and the second body of the second cooling plate is provided with the second flow passage, the second flow passage corresponds to the first flow passage, the first body is connected with the second body in a sealed manner, and the second flow passage and the first flow passage are matched to jointly form the cooling flow passage surrounding the receiving space.

The first body comprises a first segment, a second segment and a third segment, the first segment, the second segment and the third segment are of an integral structure, and two ends of the second segment are respectively connected to the first segment and the third segment in a bent manner, the second body comprises a fourth segment, a fifth segment, and a sixth segment, the fourth segment, the fifth segment, and the sixth segment are of an integral structure, two ends of the fifth segment are respectively connected to the fourth segment and the sixth segment in a bent manner, the fourth segment corresponds to and is matched with the first segment, the fifth segment corresponds to and is matched with the second segment, and the sixth segment corresponds to and is matched with the third segment. The first flow passage comprises a first sub-flow-passage and a second sub-flow-passage distributed in the first body, the first sub-flow-passage and the second sub-flow-passage are arranged side by side, the first sub-flow-passage and the second sub-flow-passage are communicated with each other, and the first sub-flow-passage and the second sub-flow-passage extend through the first segment, the second segment and the third segment. The second flow passage comprises a third sub-flow-passage and a fourth sub-flow-passage distributed in the second body, the third sub-flow-passage and the fourth sub-flow-passage are arranged side by side, the third sub-flow-passage and the fourth sub-flow-passage are communicated with each other, the third sub-flow-passage and the fourth sub-flow-passage extend through the fourth segment, the fifth segment and the sixth segment, the first sub-flow-passage corresponds to the third sub-flow-passage, and the second sub-flow-passage corresponds to the fourth sub-flow-passage. The cooling flow passage jointly formed by the first flow passage and the second flow passage is in an annular shape as a whole

It can be seen that the first flow passage is provided in the first body, a surface of the second cooling plate is flat, the part of the first body that is not provided with the first flow passage is connected to the second cooling plate in a sealed manner, the first flow passage and the second cooling plate are matched to form the cooling flow passage surrounding the receiving space, and providing the first flow passage only on the first cooling plate can simplify the preparation of the liquid cooling plate.

It can be seen that the second flow passage is provided in the second body, a surface of the first cooling plate is flat, the part of the second body that is not provided with the second flow passage is connected with the first cooling plate in a sealed manner, the second flow passage and the first cooling plate are matched to form the cooling flow passage surrounding the receiving space, and providing the second flow passage only on the second cooling plate can simplify the preparation of the liquid cooling plate.

It can be seen that the first flow passage is provided in the first body, the second flow passage is provided in the second body, and the first flow passage and the second flow passage correspond to each other and jointly form the cooling flow passage surrounding the receiving space. As such, it can effectively increase the volume of the cooling flow passage, which effectively improves the heat exchange efficiency between the heat exchange medium input into the cooling flow passage and the battery modules.

It can be seen that by dividing the first flow passage into the first sub-flow-passage and the second sub-flow-passage that are arranged side by side and communicated with each other, the diversion path of the heat exchange medium in the first flow passage is increased, which can effectively improve the heat exchange efficiency; and by dividing the second flow passage into the third sub-flow-passage and the fourth sub-flow-passage that are arranged side by side and communicated with each other, the diversion path of the heat exchange medium in the second flow passage is increased, which can effectively improve the heat exchange efficiency.

In a possible implementation, the first cooling plate further includes a first turbulent flow part provided in the first flow passage in the extension direction of the first flow passage, and the first turbulent flow part is formed by protruding from a side wall of the first flow passage in the direction toward the receiving space. The second cooling plate also includes a second turbulent flow part provided in the second flow passage in the extension direction of the second flow passage, and the second turbulent flow part is formed by protruding from a side wall of the second flow passage in the direction away from the receiving space.

It can be seen that by providing the first turbulent flow part and the second turbulent flow part, the heat exchange medium input into the cooling flow passage can be diverted, which increases the flow path of the heat exchange medium in the cooling flow passage, so that the time duration of the heat exchange between the heat exchange medium and the battery modules can be effectively prolonged, thereby achieving higher heat exchange efficiency.

In a possible implementation, the second turbulent flow part and the first turbulent flow part are in direct contact with each other, or the second turbulent flow part and the first turbulent flow part are arranged to be staggered with each other.

It can be seen that the staggered first and second turbulent flow parts are both used to divert the heat exchange medium in the flow passage, which increases the fluidity of the heat exchange medium in the flow passage and thus improves the heat exchange efficiency between the heat exchange medium and the battery modules.

In a possible implementation, a depth that the first flow passage is recessed is the same as a height that the first turbulent flow part protrudes; and the depth that the second flow passage is recessed is the same as the height that the second turbulent flow part protrudes.

It can be seen that when the peripheral edge surface of the first body is welded to the peripheral edge surface of the second body, neither the first turbulent flow part nor the second turbulent flow part will affect the sealing of the connection between the first body and the second body, ensuring the sealing of the connection between the first body and the second body.

It can be seen that the fourth segment, the fifth segment and the sixth segment are of the integral structure, the second body is obtained through the stamping and bending process using a profiling mold, and it does not need a connection structure, such as splicing, clamping or quick-plug connectors, for connecting the fourth segment, the fifth segment and the sixth segment. The three segments are integrated with no interface between them, and there is no leakage failure of the heat exchange medium in the first flow passage, so that the liquid cooling plate has high safety performance. Moreover, the fourth segment, the fifth segment and the sixth segment do not need any connection structure to connect, which can effectively reduce the cost.

In a possible implementation, the second segment is provided with a first through-hole communicated to the first sub-flow-passage, and the second segment is provided with a second through-hole communicated to the second sub-flow-passage. The first through-hole is used to connect one of a liquid inlet pipe and a liquid outlet pipe, and the second through-hole is used to connect the other of the liquid inlet pipe and the liquid outlet pipe.

It can be seen that the first through-hole is provided in the first sub-flow-passage of the second segment, the second through-hole is provided in the second sub-flow-passage of the second segment, and the first cooling plate is located further outside the receiving space compared with the second cooling plate, so that the liquid inlet pipe and the liquid outlet pipe can realize the input and output of the heat exchange medium without extending into the receiving space.

In a possible implementation, the fifth segment is provided with a first through-hole communicated to the third sub-flow-passage, and the fifth segment is provided with a second through-hole communicated to the fourth sub-flow-passage. The first through-hole is used to connect one of the liquid inlet pipe and the liquid outlet pipe, and the second through-hole is used to connect the other of the liquid inlet pipe and the liquid outlet pipe.

It can be seen that the first through-hole can also be provided in the third sub-flow-passage of the fifth segment and the second through-hole can also be provided in the fourth sub-flow-passage of the fifth segment, and in this case, both the liquid inlet pipe and the liquid outlet pipe extend into the receiving space to perform the input and output of the heat exchange medium, diversifying the ways in which the liquid cooling plate is connected with the liquid inlet pipe and the liquid outlet pipe.

In a possible implementation, the first cooling plate further includes a first connection part and a second connection part provided in the second segment, and the second cooling plate further includes a third connection part and a fourth connection part provided in the fifth segment. The first connection part is matched with the third connection part, and the second connection part is matched with the fourth connection part.

It can be seen that by providing the first connection part, the second connection part, the third connection part and the fourth connection part, it facilitates to subsequently arrange the liquid inlet pipe and the liquid outlet pipe to extend out from the lower box body at the same height, and by providing the first connection part, the second connection part, the third connection part and the fourth connection part with the same height in the horizontal direction, the liquid inlet pipe and the liquid outlet pipe can extend out at the same height.

In a possible implementation, the fifth segment is provided with a first through-hole communicated with the fourth sub-flow-passage, and the first connection part is provided with a first opening. The second connection part is provided with a third flow passage communicated with the first sub-flow-passage, and the third flow passage is recessed from the second connection part in a direction away from the receiving space. The second connection part is provided with a second opening, and the second opening is connected with the third flow passage. The third connection part is provided with a third opening corresponding to the first opening. The fourth connection part is provided with a fourth flow passage communicated with the third sub-flow-passage. The fourth flow passage is recessed from the fourth connection part in the direction toward the receiving space. The fourth flow passage corresponds to the third flow passage. The first through-hole, the first opening and the third opening are jointly used to connect one of the liquid inlet pipe and the liquid outlet pipe, and the second opening is used to connect the other of the liquid inlet pipe and the liquid outlet pipe.

It can be seen that by setting the connection positions of the liquid inlet pipe and the liquid outlet pipe at the first connection part, the second connection part, the third connection part and the fourth connection part, the liquid inlet pipe and the liquid outlet pipe can extend out at the same height.

A battery pack provided by the present disclosure includes at least one battery module and the liquid cooling plate described in any of the embodiments of the present disclosure. The liquid cooling plate is configured to perform heat exchange with the at least one battery module.

In a possible implementation, the battery pack includes a plurality of battery modules, and the liquid cooling plate is disposed between the plurality of battery modules.

It can be seen that the liquid cooling plate formed with the receiving space can exchange heat with the plurality of battery modules, and thus the heat exchange efficiency of the liquid cooling plate for the battery pack is improved.

In the liquid cooling plate and battery pack of the present disclosure, the liquid cooling plate is formed with the receiving space, the liquid cooling plate includes the first cooling plate and the second cooling plate, and the cooling flow passage surrounding the receiving space is formed between the first cooling plate and the second cooling plate. A plurality of battery modules can be placed inside and outside the receiving space, allowing one liquid cooling plate to be in close proximity to the plurality of battery modules for heat exchange. The heat exchange medium is introduced into the cooling flow passage and exchanges heat with the battery modules through the first cooling plate and the second cooling plate, thereby implementing cooling or preheating of the battery modules.

### BRIEF DESCRIPTION OF THE DRAWINGS

In order to explain the technical solutions of the embodiments of the present disclosure more clearly, the drawings to be used in the embodiments will be briefly introduced below.
FIG. 1 is a schematic three-dimensional structural diagram of a liquid cooling plate provided by an embodiment of the present disclosure;
FIG. 2 is a schematic three-dimensional structural diagram of a first cooling plate in the liquid cooling plate provided by an embodiment of the present disclosure;
FIG. 3 is a schematic three-dimensional structural diagram of a second cooling plate in the liquid cooling plate provided by an embodiment of the present disclosure;
FIG. 4 is a schematic three-dimensional structural diagram of a battery pack provided by an embodiment of the present disclosure;

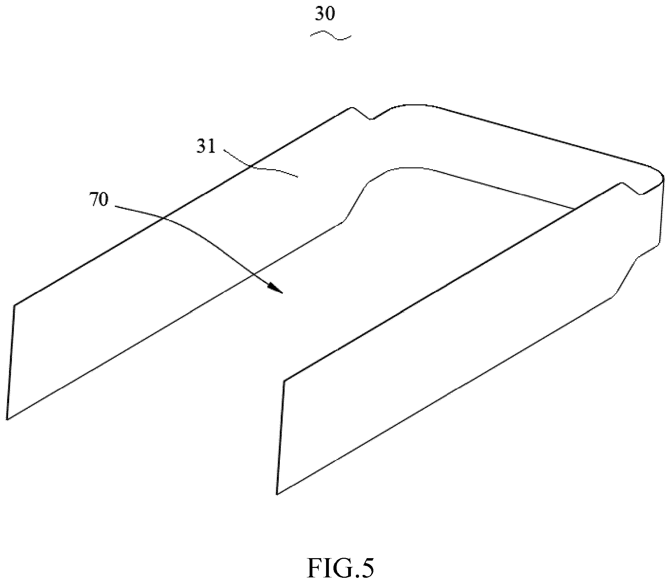

FIG. 5 is another schematic three-dimensional structural diagram of a second cooling plate in the liquid cooling plate provided by an embodiment of the present disclosure;
FIG. 6 is another schematic three-dimensional structural diagram of a first cooling plate in the liquid cooling plate provided by an embodiment of the present disclosure;
FIG. 7 is a schematic three-dimensional cross-sectional view of the liquid cooling plate shown in FIG. 1 along the line VII-VII provided by an embodiment of the present disclosure;
FIG. 8 is an enlarged schematic diagram of the liquid cooling plate shown in FIG. 7 at VIII provided by an embodiment of the present disclosure;
FIG. 9 is a schematic three-dimensional exploded structural diagram of a liquid cooling plate provided by an embodiment of the present disclosure;
FIG. 10 is a schematic three-dimensional exploded structural diagram of another liquid cooling plate provided by an embodiment of the present disclosure;
FIG. 11 is a schematic three-dimensional exploded structural diagram of still another liquid cooling plate provided by an embodiment of the present disclosure;
FIG. 12 is a schematic three-dimensional exploded structural diagram of another liquid cooling plate provided by an embodiment of the present disclosure.

Reference numerals:
Liquid cooling plate 100;
First cooling plate 10, first body 11, first segment 111, end 112, second segment 113, third segment 115, first connection part 12, first opening 121, first flow passage 13, first sub-flow-passage 131, second sub-flow-passage 133, second connection part 14, third flow passage 141, second opening 143, first turbulent flow part 15;
Liquid inlet pipe 20;
Second cooling plate 30, second body 31, fourth segment 311, end 312, fifth segment 313, sixth segment 315, third connection part 32, third opening 321, second flow passage 33, third sub-flow-passage 331, fourth sub-flow-passage 333, fourth connection part 34, fourth flow passage 341, second turbulent flow part 35;
Liquid outlet pipe 40; cooling flow passage 50;
First through-hole 60;
Receiving space 70;
Second through-hole 80;
Battery module 300;
Upper cover 400;
Lower box body 500;
Battery pack 1000.

### DETAILED DESCRIPTION

The technical solutions in the embodiments of the present disclosure will be clearly and completely described below with reference to the accompanying drawings in the embodiments of the present disclosure. Obviously, the described embodiments are only some of the embodiments of the present disclosure, but not all the embodiments. Based on the embodiments in the present disclosure, all other embodiments obtained by those of ordinary skill in the art without creative efforts fall within the protection scope of the present disclosure.

The embodiments are described below with reference to the accompanying drawings, illustrating specific embodiments of the present disclosure that can be implemented. The directional terms mentioned herein, such as "up", "down", "front", "back", "left", "right", "inside", "outside", "side", etc., are only with reference to the orientations of the drawings. Therefore, the directional terms used are for the purpose of better and clearer description and understanding of the present disclosure and do not indicate or imply that any device or component referred to must have a particular orientation or be constructed and operated in a particular orientation, and therefore cannot be construed as any limitation on the present disclosure.

In addition, the serial numbers assigned to components herein, such as "first", "second", etc., are only used to distinguish the described objects and do not have any sequential or technical meaning. The terms "connecting" and "coupling" mentioned in the present disclosure include direct and indirect connecting (coupling) unless otherwise specified.

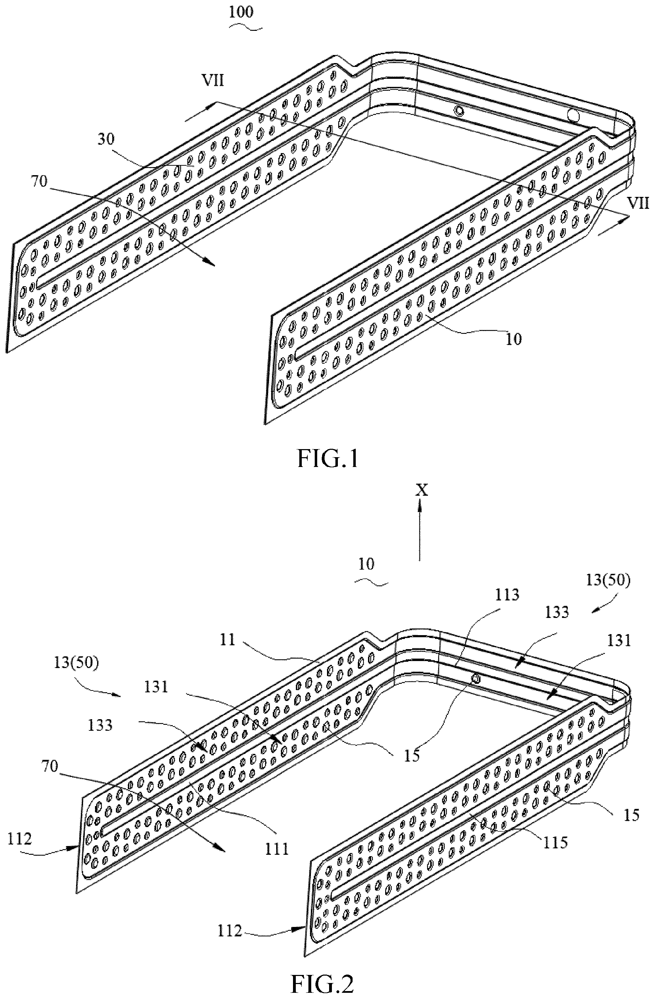

Please refer to FIG. 1, FIG. 2 and FIG. 3. In an embodiment of the present disclosure, there is provided a liquid cooling plate 100. The liquid cooling plate 100 is formed with a receiving space 70. The liquid cooling plate 100 includes a first cooling plate 10 and a second cooling plate 30. The second cooling plate 30 is stacked on a side of the first cooling plate 10 facing the receiving space 70 and is connected to the first cooling plate 10 in a sealed manner, and a cooling flow passage 50 surrounding the receiving space 70 is formed between the second cooling plate 30 and the first cooling plate 10.

An independent battery module usually contains multiple cells. During the charging and discharging process of the battery module, the chemical reactions of the multiple cells inside the battery module will generate a large amount of heat. Currently, a liquid cooling plate is often used to exchange heat with the battery module. However, at present, a battery pack is usually composed of multiple battery modules so as to form a high-power battery, and when the liquid cooling plate is used to perform the heat exchange with the multiple battery modules, the structure will be complex, and the efficiency of the heat exchange between the liquid cooling plate and the battery modules is low. Therefore, how to improve the heat exchange efficiency between the liquid cooling plate and multiple battery modules becomes an urgent problem that needs to be solved.

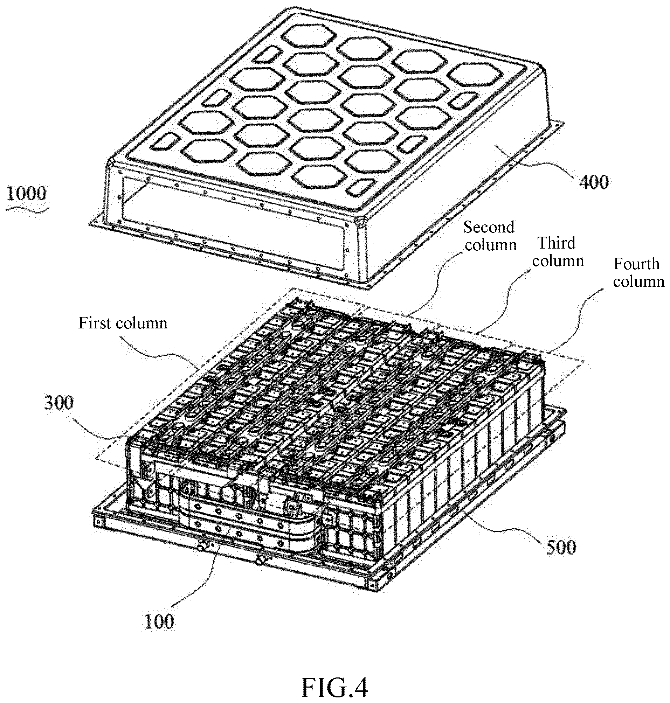

In the liquid cooling plate 100 of the present disclosure, the liquid cooling plate 100 is formed with a receiving space, and the liquid cooling plate 100 includes a first cooling plate 10 and a second cooling plate 20. A cooling flow passage 50 surrounding the receiving space is formed between the first cooling plate 10 and the second cooling plate 30. A plurality of battery modules 300 (as shown in FIG. 4) can be placed inside and outside the receiving space 70, so that one liquid cooling plate 100 can be in close proximity to the plurality of battery modules 300 for heat exchange. The heat exchange medium is introduced into the cooling flow passage 50 and exchanges heat with the battery modules 300 through the first cooling plate 10 and the second cooling plate 30, thereby implementing cooling or preheating of the battery modules 300.

Please refer to FIG. 1 and FIG. 4, in an embodiment of the present disclosure, there is provided a battery pack 1000. The battery pack 1000 includes at least one battery module 300 and the liquid cooling plate 100 described in any embodiment of the present disclosure. The liquid cooling plate 100 is used to perform heat exchange with the at least one battery module 300.

The battery pack 1000 includes one or more battery modules 300. When the battery pack 1000 includes a plurality of battery modules 300, the plurality of battery modules 300 are arranged in parallel. For example, a battery pack 1000 includes four columns of battery modules 300. The first column of battery modules 300 is placed on one side of the liquid cooling plate 100, the second column of battery modules 300 and the third column of battery modules 300 are both placed in the receiving space 70, and the fourth column of battery modules 300 is placed on the other side of the liquid cooling plate 100, as shown in FIG. 4. Part of the structure of the liquid cooling plate 100 is located between the first column of battery modules 300 and the second column of battery modules 300, and this part of the liquid cooling plate 100 performs heat exchange with both the first column of battery modules 300 and the second column of battery modules 300. Part of the structure of the liquid cooling plate 100 is located between the third column of battery modules 300 and the fourth column of battery modules 300, and this part of the liquid cooling plate 100 performs heat exchange with both the third column of battery modules 300 and the fourth column of battery modules 300. The heat exchange processing for the plurality of battery modules 300 is realized through one liquid cooling plate 100, which improves the heat exchange efficiency of the liquid cooling plate 100 for the battery pack 1000, and can effectively reduce the cost at the same time. Moreover, the first cooling plate 10 and the second cooling plate 30 do not need to be connected through quick-plug connectors, and thus the assembling of the liquid cooling plate 100 is simple.

Of course, one liquid cooling plate 100 can be used in the battery pack 1000 to exchange heat with a column of battery modules 300. For example, when the battery pack 1000 includes one column of battery modules 300, the column of battery modules 300 can be placed in the receiving space 70 of the liquid cooling plate 100, so that multiple surfaces of the column of battery modules 300 all can be in close proximity to the liquid cooling plate 100, which increases the heat exchange area between the battery modules 300 and the liquid cooling plate 100, thereby improving the heat exchange efficiency.

The battery module 300 includes a plurality of battery cells. Specifically, the battery cell may be a lead-acid battery, a nickel-metal hydride battery, a lithium battery, a lithium iron phosphate battery, or a ternary battery. The battery cell may be in the shape of a rectangular parallelepiped or a cylinder, and there is no limitation on the shape of the battery cell herein.

The battery pack 1000 may also include an upper cover 400 and a lower box body 500. The upper cover 400 and the lower box body 500 are used to encapsulate and protect the battery modules 300 and the liquid cooling plate 100.

The heat exchange medium may be a liquid (such as water or water-alcohol mixture) medium or a gas medium, which is not limited in the embodiments of the present disclosure. For example, in an example, the heat exchange medium may be water.

It should be noted that the heat exchange medium can cool or preheat the battery modules 300. When the battery modules 300 need to be heat exchanged, the heat exchange medium is input into the cooling flow passage 50. Since the battery modules 300 are in close proximity to the liquid cooling plate 100, the heat exchange medium in the cooling flow passage 50 can perform heat exchange through the liquid cooling plate 100. The battery modules 300 can be cooled or preheated by adjusting the temperature of the input heat exchange medium.

In some embodiments, in a low-temperature environment, the battery modules 300 have reduced charging and discharging performance due to the reduced activity of positive and negative electrode materials and the reduced conductivity of the electrolyte of the battery cells in the battery modules 300. In this case, it needs to input the heat exchange medium with higher temperature into the cooling flow passage 50 so as to cause the battery modules 300 to reach a suitable temperature. At the same time, the liquid cooling plate 100 is in close proximity to multiple battery modules 300, so that the liquid cooling plate 100 can exchange heat with the multiple battery modules 300 at the same time, effectively improving the preheating efficiency of the liquid cooling plate 100 for the battery pack 1000.

In some embodiments, in a high-temperature environment, the charging efficiency of the cells in the battery modules 300 will be low and the battery capacity will be reduced, and the battery modules 300 will dissipate heat during operation, resulting in the temperature of the battery modules 300 too high, and thus the heat of the battery modules 300 needs to be dissipated through the liquid cooling plate 100. In this case, it needs to introduce the heat exchange medium with a lower temperature into the cooling flow passage 50 so that the heat exchange medium in the cooling flow passage 50 can take away the heat dissipated by the battery module 300 to reduce the temperature of the battery module 300 to a suitable temperature. At the same time, the liquid cooling plate 100 is in close proximity to the multiple battery modules 300, so that the liquid cooling plate 100 can exchange heat with the multiple battery modules 300, effectively improving the cooling efficiency of the liquid cooling plate 100 for the battery pack 1000.

Referring to FIG. 1 and FIG. 4, the first cooling plate 10 and the second cooling plate 30 are a pair of components, and the number of the first cooling plates 10 is the same as the number of the second cooling plates 30. The number of the first cooling plates 10 and the number of the second cooling plates 30 may be one or more, so as to exchange heat with a larger number of battery modules 300.

The first cooling plate 10 and the second cooling plate 30 are of the same material, which can be a metal material, or a non-metallic material with good thermal conductivity. The specific material is not limited herein. Preferably, the first cooling plate 10 and the second cooling plate 30 can be made of aluminum material, which can reduce the weight of the liquid cooling plate 100, thereby reducing the overall weight of the battery pack 1000.

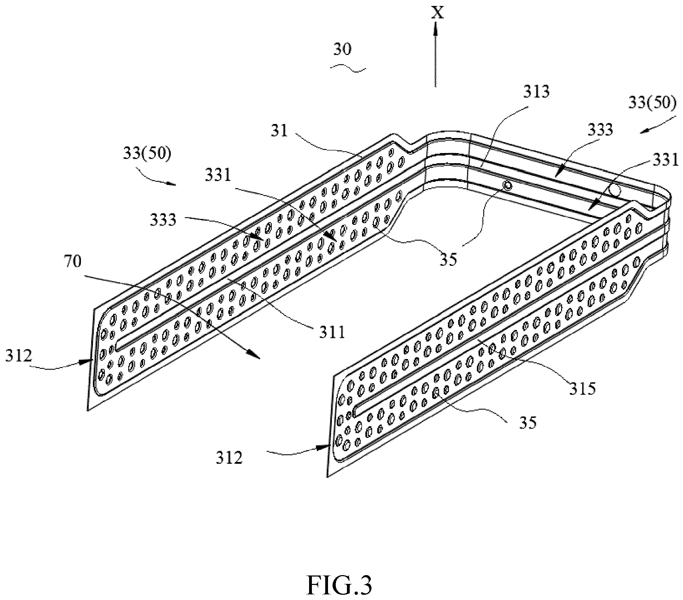

Please refer to FIGS. 2 and 3. In an embodiment, the first cooling plate 10 includes a first body 11 and a first flow passage 13 provided in the first body 11. The first flow passage 13 extends in the length direction of the first body 11, and is recessed from the first body 11 in a direction away from the receiving space 70.

The second cooling plate 30 includes a second body 31 and a second flow passage 33 provided in the second body 31. The second body 31 is stacked on a side of the first body 11 facing the receiving space 70 and is connected to the first body 11 in a sealed manner. The second flow passage 33 extends in the length direction of the second body 31 and is recessed from the second body 31 in the direction toward the receiving space 70. The second flow passage 33 corresponds to the first flow passage 13, and the second flow passage 33 and the first flow passage 13 are matched to jointly form the flow passage 50 surrounding the receiving space 70.

The first flow passage 13 includes a first sub-flow-passage 131 and a second sub-flow-passage 133 distributed in the first body 11. The first sub-flow-passage 131 and the second sub-flow-passage 133 are arranged side by side. The first sub-flow-passage 131 and the second sub-flow-passage 133 are communicated with each other, and the communicated first sub-flow-passage 131 and second sub-flow-passage 133 jointly form the first flow passage 13 in an annular shape. By dividing the first flow passage 13 into the first sub-flow-passage 131 and the second sub-flow-passage 133 that are arranged side by side and communicated with each other, the diversion path of the heat exchange medium in the first flow passage 13 is increased, which can effectively improve the heat exchange efficiency.

Specifically, the first sub-flow-passage 131 and the second sub-flow-passage 133 are communicated at the ends 112 of the first body 11, and other part of the first sub-flow-passage 131 and other part of the second sub-flow-passage 133 are arranged in parallel at intervals in the height direction X of the first body 11, that is, the interval part spaced therebetween is not provided with any flow passage.

The second flow passage 33 includes a third sub-flow-passage 331 and a fourth sub-flow-passage 333 distributed in the second body 31. The third sub-flow-passage 331 and the fourth sub-flow-passage 333 are arranged side by side. The third sub-flow-passage 331 and the fourth sub-flow-passage 333 are communicated with each other, and the communicated third sub-flow-passage 331 and fourth sub-flow-passage 333 jointly form the second flow passage 33 in an annular shape. Therefore, the cooling flow passage 50 jointly formed by the first flow passage 13 and the second flow passage 33 is in an annular shape as a whole. By dividing the second flow passage 33 into the third sub-flow-passage 331 and the fourth sub-flow-passage 333 that are arranged side by side and communicated with each other, the diversion path of the heat exchange medium in the second flow passage 33 is increased, which can effectively improve the heat exchange efficiency.

Similarly, the third sub-flow-passage 331 and the fourth sub-flow-passage 333 are communicated at ends 312 of the second body 31, and other part of the third sub-flow-passage 331 and other part of the fourth sub-flow-passage 333 are arranged in parallel at intervals in the height direction X of the second body 31, the interval part spaced therebetween is not provided with any flow passage. The interval part between the third sub-flow-passage 331 and the fourth sub-flow-passage 333 and the interval part spaced between the first sub-flow-passage 131 and the second sub-flow-passage 133 are in direct contact with each other.

The first flow passage 13 and the second flow passage 33 being matched to form the cooling flow passage 50 means that when the first body 11 and the second body 31 are attached and welded to each other to form the liquid cooling plate 100, the part of the first body 11 that is not provided with the first flow passage 13 and the part of the second body 31 that is not provided with the second flow passage 33 are in direct contact with each other, the first flow passage 13 and the second flow passage 33 are opposite in the thickness direction of the liquid cooling plate 100, and the first flow passage 13 and the second flow passage 33 jointly form the cooling flow passage 50.

Specifically, the first flow passage 13 is not provided on the peripheral edge of the first body 11, and the second flow passage 33 is not provided on the peripheral edge of the second body 31. When the first body 11 and the second body 31 are welded, the peripheral edge of the first body 11 and the peripheral edge of the second body 31 can be welded so that the first body 11 and the second body 31 are connected with each other in a sealed manner, and thus first flow passage 13 and the second flow passage 33 are sealed, which can effectively prevent the heat exchange medium in the first flow passage 13 from leaking.

Alternatively, when the peripheral edges of the first body 11 and the second body 31 are welded, the part spaced between the third sub-flow-passage 331 and the fourth sub-flow-passage 333 and the part spaced between the first sub-flow-passage 131 and the second sub-flow-passage 133 can be in direct contact with and then be welded with each other so as to strengthen the stability of the welding between the first cooling plate 10 and the second cooling plate 30.

Please refer to FIG.s 2 and 5. In another embodiment, the first cooling plate 10 includes a first body 11 and a first flow passage 13 provided in the first body 11. The first flow passage 13 extends in the length direction of the first body 11 and is recessed from the first body 11 in a direction away from the receiving space 70. The second cooling plate 30 is connected with the first body 11 in a sealed manner, and the first flow passage 13 and the second cooling plate 30 are matched to form the cooling flow passage 50 surrounding the receiving space 70.

The liquid cooling plate 100 only provides the first flow passage 13 on the first cooling plate 10 to form the cooling flow passage 50, which can make the preparation of the liquid cooling plate 100 simple and convenient, and when the liquid cooling plate 100 performs heat exchange with a column of battery modules 300, the cooling flow passage 50 can achieve cooling without a too large volume.

Similarly, the first flow passage 13 includes a first sub-flow-passage 131 and a second sub-flow-passage 133 distributed in the first body 11. The first sub-flow-passage 131 and the second sub-flow-passage 133 are communicated with each other, and the communicated first sub-flow-passage 131 and second sub-flow-passage 133 jointly form the first flow passage 13 in an annular shape. The first sub-flow-passage 131 and the second sub-flow-passage 133 are communicated at the ends 112 of the first body 11, and other part of the first sub-flow-passage 131 and other part of the second sub-flow-passage 133 are arranged in parallel at intervals in the height direction X of the first body 11, that is, the interval part spaced therebetween are not provided with any flow passage. In addition, the first flow passage 13 is not provided on the peripheral edge portion of the first body 11, and the portion of the first body 11 that is not provided with the first flow passage 13 is used to be in direct contact with the second cooling plate 30.

The surface of the second cooling plate 30 is flat. In this case, the cooling flow passage 50 of the liquid cooling plate 100 is the first flow passage 13. The peripheral edge portion of the first body 11 that is not provided with the first flow passage 13 is in direct contact with the second cooling plate 30, and the part spaced between the first sub-flow-passage 131 and the second sub-flow-passage 133 is in direct contact with the second cooling plate 30. The first body 11 and the second cooling plate 30 are fixedly connected by welding, and the first flow passage 13 in the first body 11 is sealed, which can effectively prevent the cooling medium in the first flow passage 13 from leaking.

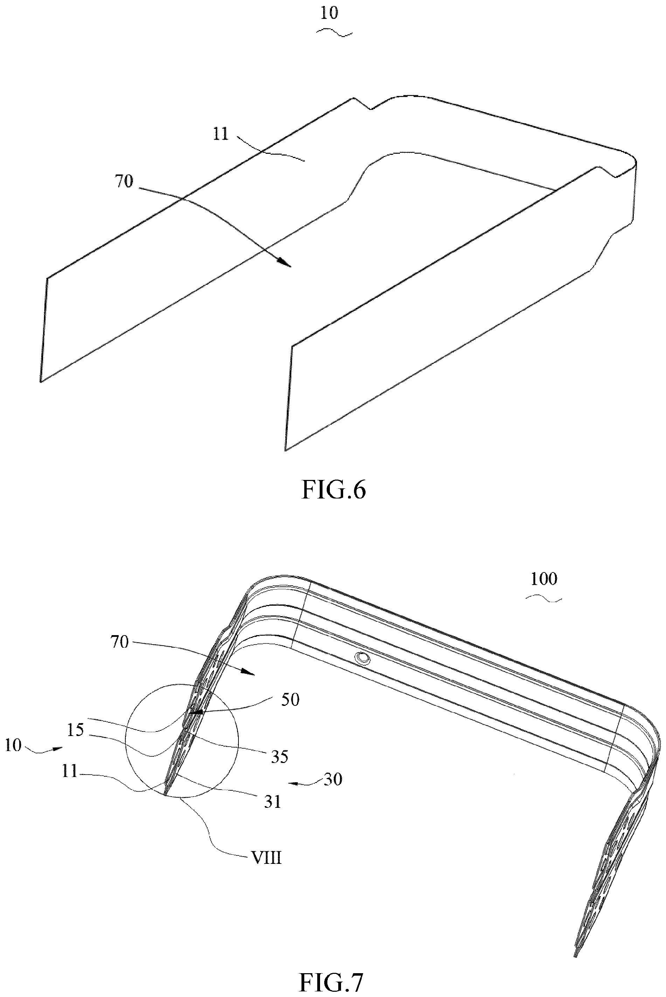

Please refer to FIG. 3 and FIG. 6. In another embodiment, the second cooling plate 30 includes a second body 31 and a second flow passage 33 provided in the second body 31. The second body 31 is stacked on the side of the first cooling plate 10 facing the receiving space 70. The second flow passage 33 extends in the length direction of the second body 31 and is recessed from the second body 31 in the direction toward the receiving space 70. The first cooling plate 10 is connected with the second body 31 in a sealed manner, and the second flow passage 33 is matched with the first cooling plate 10 to form the cooling flow passage 50 surrounding the receiving space 70.

The liquid cooling plate 100 only provides the second flow passage 33 on the second cooling plate 30 to form the cooling flow passage 50, which can also make the preparation of the liquid cooling plate 100 simple and convenient, and when the liquid cooling plate 100 performs heat exchange with a column of battery modules 300, the cooling flow passage 50 can achieve cooling without a too large volume.

The second flow passage 33 includes a third sub-flow-passage 331 and a fourth sub-flow-passage 333 distributed in the second body 31. The third sub-flow-passage 331 and the fourth sub-flow-passage 333 are arranged side by side. The third sub-flow-passage 331 and the fourth sub-flow-passage 333 are communicated with each other, and the communicated third sub-flow-passages 331 and fourth sub-flow-passages 333 jointly form the second flow passage 33 in an annular shape. Therefore, the cooling flow passage 50 jointly formed by the first flow passage 13 and the second flow passage 33 is in an annular shape as a whole. By dividing the second flow passage 33 into the third sub-flow-passage 331 and the fourth sub-flow-passage 333 that are arranged side by side and communicated with each other, the diversion path of the heat exchange medium in the second flow passage 33 is increased, which can effectively improve the heat exchange efficiency.

The third sub-flow-passage 331 and the fourth sub-flow-passage 333 are communicated at ends 312 of the second body 31, and other part of the third sub-flow-passage 331 and other part of the fourth sub-flow-passage 333 are arranged in parallel at intervals in the height direction X of the second body 31, and the interval part spaced therebetween is not provided with any flow passage. The interval part spaced between the third sub-flow-passage 331 and the fourth sub-flow-passage 333 is in direct contact with the surface of the first cooling plate 10.

Compared with the cooling flow passage 50 formed by the first flow passage 13 and the cooling flow passage 50 formed by the second flow passage 33, the cooling flow passage 50 jointly formed by the second flow passage 33 and the first flow passage 13, with the addition of the second flow passage 33, results in the cooling channel 50 having a larger volume, and more heat exchange medium can be input into the cooling channel 50 at one time, which effectively improves the heat exchange efficiency between the heat exchange medium and the battery modules 300. In the present disclosure, the structure of the liquid cooling plate 100 is described in detail in an example where the first cooling plate 10 is formed with the first flow passage 13 and the second cooling plate 30 is formed with the second flow passage 33.

In an embodiment of the present disclosure, a width of the second flow passage 33 is equal to a width of the first flow passage 13. When the first body 11 and the second body 31 are opposite and attached to each other, the side wall of the first flow passage 13 can be in direct contact with the side wall of the second flow passage 13, sealing the first flow passage 13 and the second flow passage 33.

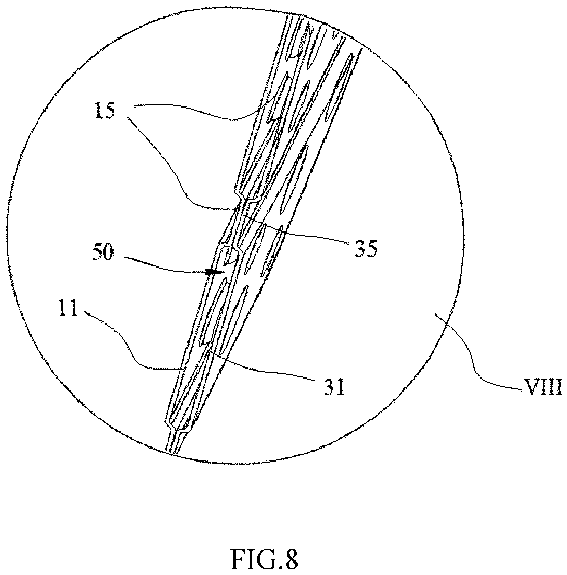

Please refer to FIGS. 7 and 8 , the first cooling plate 10 further includes a first turbulent flow part 15 provided in the first flow passage 13 in the extension direction of the first flow passage 13. The first turbulent flow part 15 is formed by protruding from the side wall of the first flow passage 13 in the direction toward the receiving space 70.

The number of first turbulent flow parts 15 is multiple, and the multiple first turbulent flow parts 15 may be evenly distributed on the side wall of the first flow passage 13, or the multiple first turbulent flow parts 15 may be unevenly spaced on the side wall of the first flow passage 13. By providing the first turbulent flow parts 15, the heat exchange medium input into the first flow passage 13 can be diverted, which increases the flow path of the heat exchange medium in the first flow passage 13 and effectively prolong the time duration of the heat exchange between the heat exchange medium and the battery modules 300, thereby achieving higher heat exchange efficiency.

The first turbulent flow part 15 has a hemispherical structure. When the heat exchange medium in the first flow passage 13 passes the surface of the first turbulent flow part 15, the heat exchange medium can flow around the first turbulent flow part 15, so as to form a reverse flow around the first turbulent flow part 15, prolonging the time duration of the heat exchange between the heat exchange medium and the battery modules 300, thereby improving the heat exchange efficiency.

Referring to FIG. 8, similarly, the second cooling plate 30 also includes a second turbulent flow part 35 provided in the second flow passage 33 in the extension direction of the second flow passage 33. The second turbulent flow part 35 is formed by protruding from the side wall of the second flow passage 33 in a direction away from the receiving space 70. The structure of the second turbulent flow part 35 is the same as that of the first turbulent flow part 15. The number of the second turbulent flow parts 35 is the same as the number of the first turbulent flow parts 15, which will not be described again.

In an embodiment, when the first body 11 and the second body 31 are connected with each other in a sealed manner, the first turbulent flow parts 15 and the second turbulent flow parts 35 may be arranged to be staggered, and the first turbulent flow parts 15 and the second turbulent flow parts 35 are both used to divert the heat exchange medium in the flow passage 50 so as to increase the fluidity of the heat exchange medium in the flow passage 50, thereby improving the heat exchange efficiency between the heat exchange medium and the battery modules 300.

In another embodiment, when the first body 11 and the second body 31 are connected with each other in a sealed manner, the first turbulent flow part 15 and the second turbulent flow part 35 are in direct contact with each other.

Referring to FIG. 8, the depth that the first flow passage 13 is recessed is the same as the height that the first turbulent flow part 15 protrudes, and the depth that the second flow passage 33 is recessed is the same as the height that the second turbulent flow part 35 protrudes. Therefore, when the peripheral edge surface of the first body 11 and the peripheral edge surface of the second body 31 are welded, both of the first turbulent flow part 15 and the second turbulent flow part 35 will not affect the sealing of the connection between the first body 11 and the second body 31, ensuring the sealing of the connection between the first body 11 and the second body 31.

Referring to FIG. 2, the first body 11 includes a first segment 111, a second segment 113 and a third segment 115. Two ends of the second segment 113 are respectively connected to the first segment 111 and the third segment 115 in a bent manner. In an embodiment of the present disclosure, the first segment 111, the second segment 113 and the third segment 115 are of an integral structure, and the first body 11 is obtained through stamping and bending process using a profiling mold. The first segment 111, the second segment 113 and the third segment 115 do not need to be connected through connection structures such as splicing, clamping or quick-plug joints, and the three segments are integrated with no interface therebetween. There is no leakage failure of the heat exchange medium in the first flow passage 13, so that the liquid cooling plate 100 has high safety performance. Moreover, the first segment 111, the second segment 113 and the third segment 115 do not need any connection structure to connect, which can effectively reduce the cost.

The first segment 111, the second segment 113 and the third segment 115 connected in sequence form a U-shaped structure. The first segment 111 and the third segment 115 are opposite with each other. The first segment 111 and the third segment 115 are respectively located between the two columns of battery modules 300. The length of the first segment 111 and the length of the third segment 115 can be set according to the length of one column of battery modules 300. Specifically, the length of the first segment 111 and the length of the third segment 115 are both slightly longer than the length of one column of battery modules 300. The second segment 113 corresponds to the width of two columns of battery modules 300, and the length of the second segment 113 is slightly larger than the width of the two columns of battery modules 300, ensuring that two columns of battery modules 300 can be placed in the receiving space 70.

Referring to FIG. 2 and FIG. 3, similarly, the second body 31 includes a fourth segment 311, a fifth segment 313 and a sixth segment 315. Two ends of the fifth segment 313 are respectively connected to the fourth segment 311 and the sixth segment 315 in a bent manner. The fourth segment 311 corresponds to and is matched with the first segment 111, the fifth segment 313 corresponds to and is matched with the second segment 113, and the sixth segment 315 corresponds to and is matched with the third segment 115.

In an embodiment of the present disclosure, the fourth segment 311, the fifth segment 313 and the sixth segment 315 are of an integral structure, the second body 31 is obtained through stamping and bending process using a profiling mold, and the fourth segment 311, the fifth segment 313 and the sixth segment 315 do not need to be connected through a connection structure, such as splicing, clamping or quick-plug connectors. The three segments are integrated with no interface therebetween, and there is no leakage failure of the heat exchange medium in the first flow passage 13, so that the liquid cooling plate 100 has high safety performance. Moreover, the fourth segment 311, the fifth segment 313 and the sixth segment 315 do not need any connection structure to connect, which can effectively reduce the cost.

Please refer to FIG. 4, the fourth segment 311, the fifth segment 313 and the sixth segment 315 connected in sequence form a U-shaped structure. The fourth segment 311 and the sixth segment 315 are opposite with each other, and the fourth segment 311 and the sixth segment 315 are respectively located between two columns of battery modules 300. The length of the fourth segment 311 and the length of the sixth segment 315 can be set according to the length of the battery modules 300 and can be equal to the length of the first segment 111 and the length of the third segment 115 respectively. Specifically, the length of the fourth segment 311 and the length of the sixth segment 315 are both slightly larger than the length of one column of 300 battery modules. The fifth segment 313 corresponds to the width of the two columns of battery modules 300, and the length of the fifth segment 313 is slightly larger than the width of two columns of battery modules 300, ensuring that two columns of battery modules 300 can be placed in the receiving space 70.

Specifically, when the first body 11 and the second body 31 are welded to form the liquid cooling plate 100, the first segment 111 is attached to the fourth segment 311, the second segment 113 is attached to the fifth segment 313, and the third segment 115 is attached to the sixth segment 315. When the liquid cooling plate 100 is used to exchange heat with four columns of battery modules 300, as shown in FIG. 4, the first segment 111 and the fourth segment 311 are located between the third column of battery modules 300 and the fourth column of battery modules 300, respectively, and the first segment 111 and the fourth segment 311 are used to exchange heat with the third column of battery modules 300 and the fourth column of battery modules 300. The third segment 115 and the sixth segment 315 are respectively located between the first column of battery modules 300 and the second column of battery modules 300, and the third segment 115 and the sixth segment 315 are used to exchange heat with the first column of battery modules 300 and the second column of battery modules 300. When the heat exchange medium is introduced into the cooling flow passage 50, the heat dissipated by the four columns of battery modules 300 is exchanged with the heat exchange medium in the cooling flow passage 50 through the first segment 111, the fourth segment 311, the third segment 115 and the sixth segment 315.

Of course, both the second segment 113 and the fifth segment 313 can be in contact with the short side of the two columns of battery modules 300, so that the cooling flow passages 50 in the second segment 113 and the fifth segment 313 can also perform heat exchange with the battery modules 300, thereby further improving the heat exchange efficiency of the liquid cooling plate 100 for the battery modules 300.

In an embodiment of the present disclosure, the number of the first turbulent flow parts 15 in the first segment 111 and the third segment 115 is greater than the number of the first turbulent flow parts 15 in the second segment 113, and the number of the second turbulent flow parts 35 in the fourth segment 311 and the sixth segment 315 is greater than the number of the second turbulent flow parts 35 in the fifth segment 313, ensuring a longer time duration of the heat exchange between the heat exchange medium in the cooling flow passage 50 of the liquid cooling plate 100 and the battery modules 300, thereby improving the heat exchange efficiency.

Please continue to refer to FIG. 2 and FIG. 3. The first sub-flow-passage 131 and the second sub-flow-passage 133 extend through the first segment 111, the second segment 113 and the third segment 115. The third sub-flow-passage 331 and the fourth sub-flow-passage 333 extend through the fourth segment 311, the fifth segment 313 and the sixth segment 315. The first sub-flow-passage 131 corresponds to the third sub-flow-passage 331, the width of the first sub-flow-passage 131 is equal to the width of the third sub-flow-passage 331, the second sub-flow-passage 133 corresponds to the fourth sub-flow-passage 333, and the width of the second sub-flow-passage 133 is equal to the width of the fourth sub-flow-passage 333.

Therefore, one of the sub-flow-passages (for example, the first sub-flow-passage 131 or the third sub-flow-passage 331) can be used to be connected with the liquid inlet pipe 20 to input the heat exchange medium into the cooling flow passage 50, and another sub-flow-passage (such as the second sub-channel 133 or the fourth sub-channel 333) can be used to be connected with the liquid outlet pipe 40 to discharge the heat exchange medium after heat exchange out of the flow passage 50.

The width of the first sub-channel 131 at the first segment 111 and the width of the first sub-channel 131 at the third segment 115 are both greater than or equal to the width of the first sub-channel 131 at the second segment 113; and the width of the second sub-channel 133 of the first segment 111 and the width of the second sub-channel 133 of the third segment 115 are both greater than or equal to the width of the second sub-channel 133 of the second segment 113.

The width of the third sub-channel 331 of the fourth segment 311 and the width of the third sub-channel 331 of the sixth segment 315 are both greater than or equal to the width of the third sub-channel 331 of the fifth segment 313; and the width of the fourth sub-flow-passage 333 of the fourth segment 311 and the width of the fourth sub-flow-passage 333 of the sixth segment 315 are both greater than or equal to the width of the fourth sub-flow-passage 333 of the fifth segment 313.

It should be noted that the width of each of the sub-flow-passages mentioned above refers to the length of the sub-flow-passage extending in the height direction X of the first body 11 or the second body 31.

In an embodiment of the present disclosure, the width of the first sub-flow-passage 131 is equal to the width of the second sub-flow-passage 133. The width of the first sub-flow-passage 131 at the first segment 111 and the width of the first sub-flow-passage 131 at the third segment 115 are both greater than the width of the first sub-flow-passage 131 at the second segment 113. Since the width of the first sub-flow-passage 131 is equal to the width of the third sub-flow-passage 331, the width of the third sub-flow-passage 331 of the fourth segment 311 and the width of the third sub-flow-passage 331 of the sixth segment 315 are both larger than the width of the third sub-flow-passage 331 of the fifth segment 313.

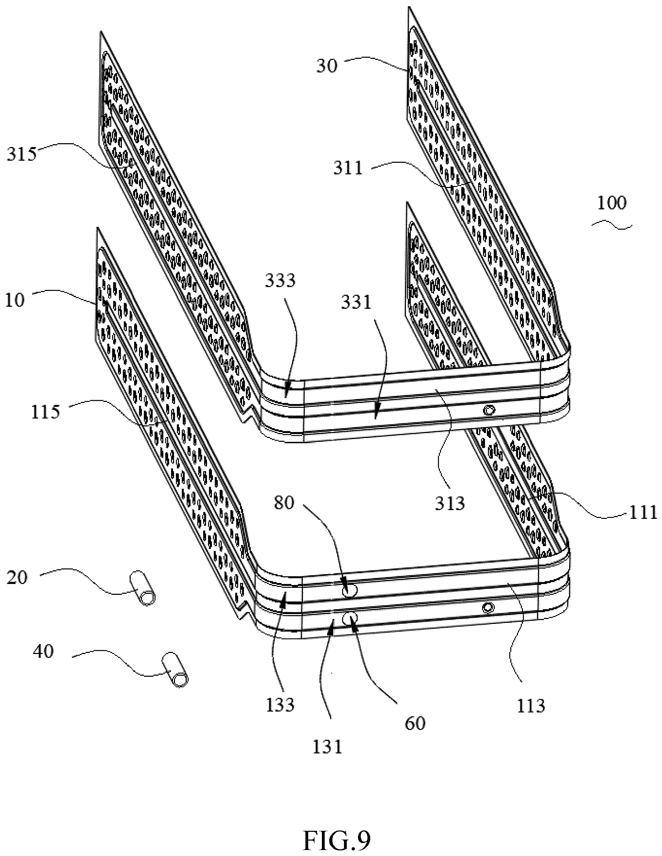

Please refer to FIG. 9. In an embodiment, the second segment 113 is provided with a first through-hole 60 communicated with the first sub-flow-passage 131, and the second segment 113 is provided with a second through-hole 80 communicated with the second sub-flow-passage 133. The first through-hole 60 is used to connect one of the liquid inlet pipe 20 and the liquid outlet pipe 40, and the second through-hole 80 is used to connect the other one of the liquid inlet pipe 20 and the liquid outlet pipe 40. For example, the first through-hole 60 is used to connect the liquid inlet pipe 20, and the second through-hole 80 is used to connect the liquid outlet pipe 40. In this case, when the heat exchange medium is input into the liquid inlet pipe 20, the heat exchange medium flows into the sub-flow-passage formed by the first sub-flow-passage 131 and the third sub-flow-passage 331 through the first through-hole 60, and then flows into the sub-flow-passage formed jointly by the second sub-flow-passage 133 and the fourth sub-flow-passage 333, and is finally discharged from the liquid outlet pipe 40 connected to the second through-hole 80.

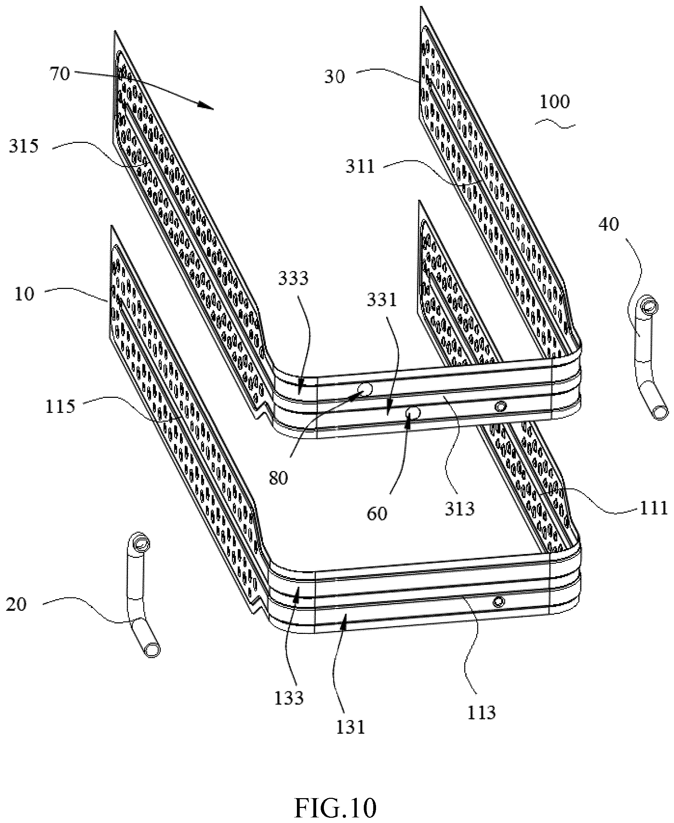

Please refer to FIG. 10. In another embodiment, the fifth segment 313 is provided with a first through-hole 60 communicated with the third sub-flow-passage 331, and the fifth segment 313 is provided with a second through-hole 80 communicated with the fourth sub-flow-passage 333. The first through-hole 60 is used to be connected with one of the liquid inlet pipe 20 and the liquid outlet pipe 40, and the second through-hole 80 is used to be connected with the other of the liquid inlet pipe 20 and the liquid outlet pipe 40. The present embodiment differs from the above-mentioned embodiments in that the first through-hole 60 and the second through-hole 80 are provided on the fifth segment 313 of the second body 31. In this case, the liquid inlet pipe 20 and the liquid outlet pipe 40 are bent and extend into the receiving space 70 from the top or bottom of the liquid cooling plate 100 and are connected with the first through-hole 60 and the second through-hole 80.

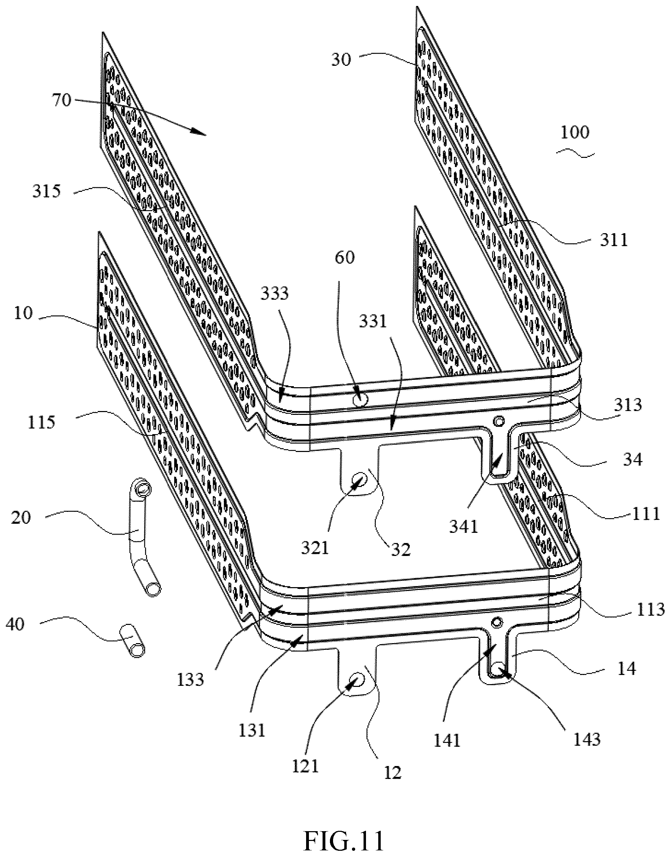

Please refer to FIG. 11. In yet another embodiment, the first cooling plate 10 further includes a first connection part 12 and a second connection part 14 disposed on the second segment 113. The first connection part 12 is spaced apart from the second connection part 14. The first connection part 12 is provided with a first opening 121. The second connection part 14 is provided with a third flow passage 141 communicated with the first sub-flow-passage 131. The third flow passage 141 is recessed from the second connection part 14 in the direction away from the receiving space 70. The second connection part 14 is provided with a second opening 143 that is connected with the third flow passage 141.

The second cooling plate 30 further includes a third connection part 32 and a fourth connection part 34 that are provided on the fifth segment 313. The third connection part 32 is spaced apart from the fourth connection part 34, the third connection part 32 is matched with the first connection part 12, and the fourth connection part 34 is matched with the second connection part 14. The third connection part 32 is provided with a third opening 321, and the third opening 321 corresponds to the first opening 121. The fourth connection part 34 is provided with a fourth flow passage 341 communicated with the third sub-flow-passage 331. The fourth flow passage 341 is recessed from the fourth connection part 34 in the direction toward the receiving space 70. The fourth flow passage 341 corresponds to and is matched with the third flow passage 141 to form a branch flow passage communicated with the flow passage 50, and the branch flow passage is used to be connected with the liquid inlet pipe 20 or the liquid outlet pipe 40.

Since the connection position of the liquid inlet pipe 20 of the liquid cooling plate 100 with the liquid cooling plate 100 and the connection position of the liquid outlet pipe 40 with the liquid cooling plate 100 are not at the same height, in order to facilitate the liquid inlet pipe 20 and the liquid outlet pipe 40 to extend out from the lower box body 500 (as shown in FIG. 4 ) at the same height, the first connection part 12, the second connection part 14, the third connection part 32 and the fourth connection part 34 are disposed at the same height in the horizontal direction to allow the liquid inlet pipe 20 and the liquid outlet pipe 40 to extend out at the same height.

Specifically, the fifth segment 313 is provided with a first through-hole 60 communicated with the fourth sub-flow-passage 333. When the first cooling plate 10 and the second cooling plate 30 are connected in a sealed manner, the first opening 121 and the third opening 321 are coaxially arranged. The first through-hole 60, the first opening 121 and the third opening 321 are jointly used to connect one of the liquid inlet pipe 20 or the liquid outlet pipe 40, and the second opening 143 is used to connect the other of the liquid inlet pipe 20 and the liquid outlet pipe 40. For example, the first through-hole 60, the first opening 121 and the third opening 321 are jointly used to connect the liquid inlet pipe 20, and the second opening 143 is used to connect the liquid outlet pipe 40. The liquid inlet pipe 20 has a U-shaped structure, one end of the liquid inlet pipe 20 is connected to the first through-hole 60, and the other end of the liquid inlet pipe 20 extends out from the receiving space 70 to be connected to the first opening 121 and the third opening 321. The liquid outlet pipe 40 is connected to the second opening 143 and connected with the third flow passage 141 and the fourth flow passage 341.

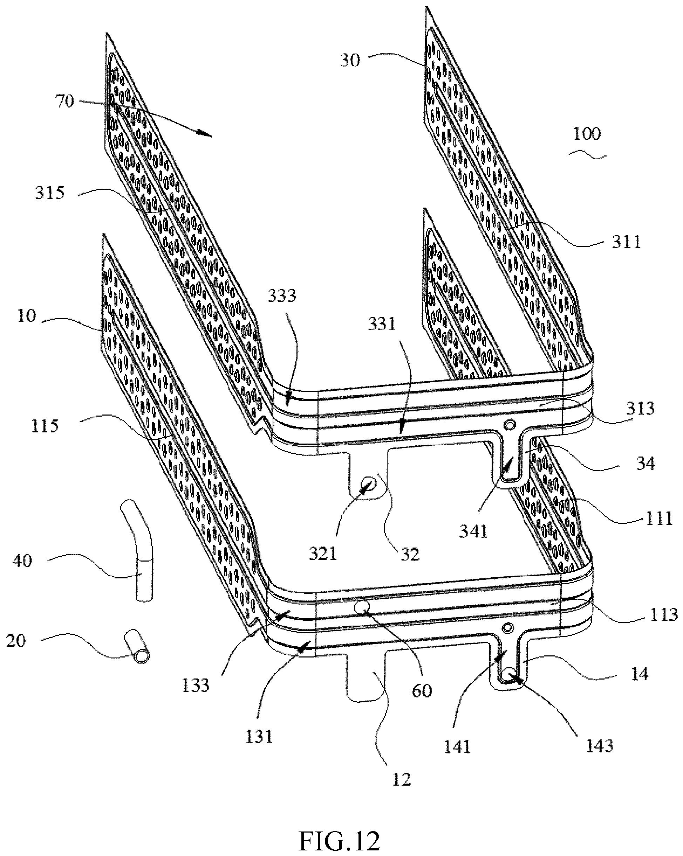

Please refer to FIG. 12. Specifically, the second segment 113 is provided with a first through-hole 60 communicated with the second sub-flow-passage 133. In this case, the first connection part 12 may not be provided with the first opening 121 (as shown in FIG. 11), the first through-hole 60 is used to connect one of the liquid inlet pipe 20 or the liquid outlet pipe 40, and the second opening 143 is used to connect the other one of the liquid inlet pipe 20 and the liquid outlet pipe 40. For example, the first through-hole 60 is used to be connected with the liquid outlet pipe 40, and the second opening 143 is used to be connected with the liquid inlet pipe 20. The liquid outlet pipe 40 has an L-shaped structure, and the liquid outlet pipe 40 is arranged outside the receiving space 70. The end of the liquid outlet pipe 40 that is not connected to the first through-hole 60 is disposed at the same height as the second opening 143.

Those described above are only the some of the embodiments of the present disclosure. It should be noted that improvements and modifications can also be made by those skilled in the art without departing from the scope of the invention as defined by the appended claims.

## Claims

1. A liquid cooling plate (100), formed with a receiving space (70) and comprising:
a first cooling plate (10); and
a second cooling plate (30) that is stacked on a side of the first cooling plate (10) facing the receiving space (70) and is connected with the first cooling plate (10) in a sealed manner, wherein a cooling flow passage (50) surrounding the receiving space (70) is formed between the first cooling plate (10) and the second cooling plate (30), wherein the first cooling plate (10) comprises a first body (11) and a first flow passage (13) provided in the first body (11), and the first flow passage (13) extends in a length direction of the first body (11) and is recessed from the first body (11) in a direction away from the receiving space (70), wherein the second cooling plate (30) comprises a second body (31) and a second flow passage (33) provided in the second body (31), the second body (31) is stacked on a side of the first body (11) facing the receiving space (70), and the second flow passage extends in a length direction of the second body (31) and is recessed from the second body (31) in a direction toward the receiving space (70),
wherein in a case that the first body (11) of the first cooling plate (10) is provided with the first flow passage (13) and the second body (31) of the second cooling plate (30) is provided with the second flow passage (33), the second flow passage (33) corresponds to the first flow passage (13), the first body (11) is connected with the second body (31) in a sealed manner, and the second flow passage (33) and the first flow passage (13) are matched to jointly form the cooling flow passage (50) surrounding the receiving space (70),
wherein the first body (11) comprises a first segment (111), a second segment (113) and a third segment (115), the first segment (111), the second segment (113) and the third segment (115) are of an integral structure, and two ends of the second segment (115) are respectively connected to the first segment (111) and the third segment (115) in a bent manner,
wherein the second body (31) comprises a fourth segment (311), a fifth segment (313), and a sixth segment (315), the fourth segment (311), the fifth segment (313), and the sixth segment (315) are of an integral structure, two ends of the fifth segment (313) are respectively connected to the fourth segment (311) and the sixth segment (315) in a bent manner, the fourth segment (311) corresponds to and is matched with the first segment (111), the fifth segment (313) corresponds to and is matched with the second segment (113), and the sixth segment (315) corresponds to and is matched with the third segment (115),
wherein the first flow passage (13) comprises a first sub-flow-passage (131) and a second sub-flow-passage (133) distributed in the first body (11), the first sub-flow-passage (131) and the second sub-flow-passage (133) are arranged side by side, the first sub-flow-passage (131) and the second sub-flow-passage (133) are communicated with each other, and the first sub-flow-passage (131) and the second sub-flow-passage (133) extend through the first segment (111), the second segment (113) and the third segment (115);
wherein the second flow passage (33) comprises a third sub-flow-passage (331) and a fourth sub-flow-passage (333) distributed in the second body (31), the third sub-flow-passage (331) and the fourth sub-flow-passage are arranged side by side, the third sub-flow-passage (331) and the fourth sub-flow-passage (333) are communicated with each other, the third sub-flow-passage (331) and the fourth sub-flow-passage (333) extend through the fourth segment (311), the fifth segment (313) and the sixth segment (315), the first sub-flow-passage (131) corresponds to the third sub-flow-passage (331), and the second sub-flow-passage (133) corresponds to the fourth sub-flow-passage (333); and
wherein the cooling flow passage (50)jointly formed by the first flow passage (13) and the second flow passage (33) is in an annular shape as a whole.

2. The liquid cooling plate (100) according to claim 1, wherein the first cooling plate (10) further comprises a first turbulent flow part (15) provided in the first flow passage (13) in an extension direction of the first flow passage (13), and the first turbulent flow part (15) is formed by protruding from a side wall of the first flow passage (13) in the direction toward the receiving space (70);
the second cooling plate (30) further comprises a second turbulent flow part (35) provided in the second flow passage (33) in an extension direction of the second flow passage (33), and the second turbulent flow part (35) is formed by protruding from the second flow passage (33) in the direction away from the receiving space (70).

3. The liquid cooling plate (100) according to claim 2, wherein the second turbulent flow part (35) and the first turbulent flow part (15) are in direct contact with each other, or the second turbulent flow part (35) and the first turbulent flow part (15) are arranged to be staggered with each other.

4. The liquid cooling plate (100) according to claim 3, wherein a depth that the first flow passage (13) is recessed is the same as a height that the first turbulent flow part (15) protrudes; and a depth that the second flow passage (33) is recessed is the same as a height that the second turbulent flow part (35) protrudes.

5. The liquid cooling plate (100) according to claim 1, wherein the second segment (113) is provided with a first through-hole (60) communicated with the first sub-flow-passage (131), and the second segment (113) is provided with a second through-hole (80) communicated with the second sub-flow-passage (133), the first through-hole (60) is configured to connect one of a liquid inlet pipe (20) and a liquid outlet pipe (40), and the second through-hole (80) is configured to connect the other one of the liquid inlet pipe (20) and the liquid outlet pipe (40); or
the fifth segment (313) is provided with the first through-hole (60) communicated with the third sub-flow-passage (331), and the fifth segment (313) is provided with the second through-hole (80) communicated with the fourth sub-flow-passage (333), the first through-hole (60) is configured to connect one of the liquid inlet pipe (20) and the liquid outlet pipe (40), and the second through-hole (80) is configured to connect the other one of the liquid inlet pipe (20) and the liquid outlet pipe (40).

6. The liquid cooling plate (100) according to claim 5, wherein the first cooling plate (10) further comprises a first connection part (12) and a second connection part (14) that are provided on the second segment (113), and the second cooling plate (30) further comprises a third connection part (32) and a fourth connection part (34) that are provided on the fifth segment (313), the first connection part (12) is matched with the third connection part (32), and the second connection part (14) is matched with the fourth connection part (34).

7. The liquid cooling plate (100) according to claim 6, wherein the fifth segment (313) is provided with a first through-hole (60) communicated with the fourth sub-flow-passage (333), and the first connection part (12) is provided with a first opening (121);
the second connection part (14) is provided with a third flow passage (141) communicated with the first sub-flow-passage (131), the third flow passage (141) is recessed from the second connection part (14) in the direction away from the receiving space (70), the second connection part (14) is provided with a second opening (143), and the second opening (143) is connected with the third flow passage (141);
the third connection part (32) is provided with a third opening (321), and the third opening (321) corresponds to the first opening (121); and
the fourth connection part (34) is provided with a fourth flow passage (341) communicated with the third sub-flow-passage (331), the fourth flow passage (341) is recessed from the fourth connection part (34) in the direction toward the receiving space (70), the fourth flow passage (341) corresponds to the third flow passage (141), wherein the first through-hole (60), the first opening (121) and the third opening (321) are j ointly configured to connect one of the liquid inlet pipe (20) and the liquid outlet pipe (40), and the second opening (143) is configured to connect the other of the liquid inlet pipe (20) and the liquid outlet pipe (40).

8. A battery pack (1000), comprising:
at least one battery module (300); and
the liquid cooling plate (100) according to any one of claims 1 to 7, wherein the liquid cooling plate (100) is configured to perform heat exchange with the at least one battery module (300).

9. The battery pack (1000) according to claim 8, wherein the battery pack (1000) comprises a plurality of battery modules (300), and the liquid cooling plate (100) is disposed between the plurality of battery modules (300).

## Patentansprüche

1. Flüssigkeitskühlplatte (100), die mit einem Aufnahmeraum (70) ausgebildet ist und Folgendes umfasst:
eine erste Kühlplatte (10); und
eine zweite Kühlplatte (30), die auf einer dem Aufnahmeraum (70) zugewandten Seite der ersten Kühlplatte (10) gestapelt und mit der ersten Kühlplatte (10) in einer abgedichteten Weise verbunden ist, wobei ein den Aufnahmeraum (70) umgebender Kühlströmungskanal (50) zwischen der ersten Kühlplatte (10) und der zweiten Kühlplatte (30) ausgebildet ist, wobei die erste Kühlplatte (10) einen ersten Körper (11) und einen ersten Strömungskanal (13) umfasst, der in dem ersten Körper (11) vorgesehen ist, und der erste Strömungskanal (13) sich in einer Längenrichtung des ersten Körpers (11) erstreckt und vom ersten Körper (11) in einer Richtung weg vom Aufnahmeraum (70) zurückgesetzt ist, wobei die zweite Kühlplatte (30) einen zweiten Körper (31) und einen im zweiten Körper (31) vorgesehenen zweiten Strömungskanal (33) umfasst, wobei der zweite Körper (31) auf einer dem Aufnahmeraum (70) zugewandten Seite des ersten Körpers (11) gestapelt ist und sich der zweite Strömungskanal in einer Längenrichtung des zweiten Körpers (31) erstreckt und vom zweiten Körper (31) in Richtung des Aufnahmeraums (70) zurückgesetzt ist,
wobei in einem Fall, in dem der erste Körper (11) der ersten Kühlplatte (10) mit dem ersten Strömungskanal (13) versehen ist und der zweite Körper (31) der zweiten Kühlplatte (30) mit dem zweiten Strömungskanal (33) versehen ist, der zweite Strömungskanal (33) dem ersten Strömungskanal (13) entspricht, der erste Körper (11) mit dem zweiten Körper (31) in einer abgedichteten Weise verbunden ist, und der zweite Strömungskanal (33) und der erste Strömungskanal (13) so aufeinander abgestimmt sind, dass sie gemeinsam den den Aufnahmeraum (70) umgebenden Kühlströmungskanal (50) ausbilden,
wobei der erste Körper (11) ein erstes Segment (111), ein zweites Segment (113) und ein drittes Segment (115) umfasst, wobei das erste Segment (111), das zweite Segment (113) und das dritte Segment (115) eine integrale Struktur aufweisen und zwei Enden des zweiten Segments (115) jeweils mit dem ersten Segment (111) und dem dritten Segment (115) in einer gebogenen Weise verbunden sind,
wobei der zweite Körper (31) ein viertes Segment (311), ein fünftes Segment (313) und ein sechstes Segment (315) umfasst, wobei das vierte Segment (311), das fünfte Segment (313) und das sechste Segment (315) eine integrale Struktur aufweisen, wobei zwei Enden des fünften Segments (313) jeweils mit dem vierten Segment (311) und das sechste Segment (315) in gebogener Weise verbunden sind, das vierte Segment (311) dem ersten Segment (111) entspricht und mit diesem abgestimmt ist, das fünfte Segment (313) dem zweiten Segment (113) entspricht und mit diesem abgestimmt ist, und das sechste Segment (315) dem dritten Segment (115) entspricht und mit diesem abgestimmt ist,
wobei der erste Strömungskanal (13) einen ersten Unterströmungskanal (131) und einen zweiten Unterströmungskanal (133) umfasst, die im ersten Körper (11) verteilt sind, der erste Unterströmungskanal (131) und der zweite Unterströmungskanal (133) nebeneinander angeordnet sind, der erste Unterströmungskanal (131) und der zweite Unterströmungskanal (133) miteinander in Verbindung stehen und sich der erste Unterströmungskanal (131) und der zweite Unterströmungskanal (133) durch das erste Segment (111), das zweite Segment (113) und das dritte Segment (115) erstrecken;
wobei der zweite Strömungskanal (33) einen dritten Unterströmungskanal (331) und einen vierten Unterströmungskanal (333) umfasst, die im zweiten Körper (31) verteilt sind, wobei der dritte Unterströmungskanal (331) und der vierte Unterströmungskanal nebeneinander angeordnet sind, wobei der dritte Unterströmungskanal (331) und der vierte Unterströmungskanal (333) miteinander in Verbindung stehen, sich der dritte Unterströmungskanal (331) und der vierte Unterströmungskanal (333) durch das vierte Segment (311), das fünfte Segment (313) und das sechste Segment (315) erstrecken, der erste Unterströmungskanal (131) dem dritten Unterströmungskanal (331) entspricht und der zweite Unterströmungskanal (133) dem vierten Unterströmungskanal (333) entspricht; und
wobei der Kühlströmungskanal (50), der gemeinsam durch den ersten Strömungskanal (13) und den zweiten Strömungskanal (33) ausgebildet ist, insgesamt eine ringförmige Form aufweist.

2. Flüssigkeitskühlplatte (100) gemäß Anspruch 1, wobei die erste Kühlplatte (10) ferner einen ersten Turbulenzströmungsteil (15) umfasst, der in dem ersten Strömungskanal (13) in einer Erstreckungsrichtung des ersten Strömungskanals (13) vorgesehen ist, und der erste Turbulenzströmungsteil (15) durch einen Vorsprung aus einer Seitenwand des ersten Strömungskanals (13) in Richtung des Aufnahmeraums (70) ausgebildet ist;
die zweite Kühlplatte (30) ferner einen zweiten Turbulenzströmungsteil (35) umfasst, der in dem zweiten Strömungskanal (33) in einer Erstreckungsrichtung des zweiten Strömungskanals (33) vorgesehen ist, und der zweite Turbulenzströmungsteil (35) durch einen Vorsprung aus dem zweiten Strömungskanal (33) in einer Richtung weg von dem Aufnahmeraum (70) ausgebildet ist.

3. Flüssigkeitskühlplatte (100) gemäß Anspruch 2, wobei der zweite Turbulenzströmungsteil (35) und der erste Turbulenzströmungsteil (15) in direktem Kontakt miteinander stehen oder der zweite Turbulenzströmungsteil (35) und der erste Turbulenzströmungsteil (15) versetzt zueinander angeordnet sind.

4. Flüssigkeitskühlplatte (100) gemäß Anspruch 3, wobei eine Tiefe, um die der erste Strömungskanal (13) zurückgesetzt ist, einer Höhe entspricht, um die der erste Turbulenzströmungsteil (15) hervorsteht, und eine Tiefe, um die der zweite Strömungskanal (33) zurückgesetzt ist, einer Höhe entspricht, um die der zweite Turbulenzströmungsteil (35) hervorsteht.

5. Flüssigkeitskühlplatte (100) gemäß Anspruch 1, wobei das zweite Segment (113) mit einem ersten Durchgangsloch (60) versehen ist, das mit dem ersten Unterströmungskanal (131) in Verbindung steht, und das zweite Segment (113) mit einem zweiten Durchgangsloch (80) versehen ist, das mit dem zweiten Unterströmungskanal (133) in Verbindung steht, wobei das erste Durchgangsloch (60) so konfiguriert ist, dass es eines von einem Flüssigkeitseinlassrohr (20) und einem Flüssigkeitsauslassrohr (40) verbindet, und das zweite Durchgangsloch (80) so konfiguriert ist, dass es das andere von dem Flüssigkeitseinlassrohr (20) und dem Flüssigkeitsauslassrohr (40) verbindet; oder
das fünfte Segment (313) mit dem ersten Durchgangsloch (60) versehen ist, das mit dem dritten Unterströmungskanal (331) in Verbindung steht, und das fünfte Segment (313) mit dem zweiten Durchgangsloch (80) versehen ist, das mit dem vierten Unterströmungskanal (333) in Verbindung steht, das erste Durchgangsloch (60) so konfiguriert ist, dass es eines von dem Flüssigkeitseinlassrohr (20) und dem Flüssigkeitsauslassrohr (40) verbindet, und das zweite Durchgangsloch (80) so konfiguriert ist, dass es das andere von dem Flüssigkeitseinlassrohr (20) und dem Flüssigkeitsauslassrohr (40) verbindet.

6. Flüssigkeitskühlplatte (100) gemäß Anspruch 5, wobei die erste Kühlplatte (10) ferner einen ersten Verbindungsteil (12) und einen zweiten Verbindungsteil (14) umfasst, die auf dem zweiten Segment (113) vorgesehen sind, und die zweite Kühlplatte (30) ferner einen dritten Verbindungsteil (32) und einen vierten Verbindungsteil (34) umfasst, die am fünften Segment (313) vorgesehen sind, wobei der erste Verbindungsteil (12) mit dem dritten Verbindungsteil (32) zusammenpasst und der zweite Verbindungsteil (14) mit dem vierten Verbindungsteil (34) zusammenpasst.

7. Flüssigkeitskühlplatte (100) gemäß Anspruch 6, wobei das fünfte Segment (313) mit einem ersten Durchgangsloch (60) versehen ist, das mit dem vierten Unterströmungskanal (333) in Verbindung steht, und der erste Verbindungsteil (12) mit einer ersten Öffnung (121) versehen ist;
der zweite Verbindungsteil (14) mit einem dritten Strömungskanal (141) versehen ist, der mit dem ersten Unterströmungskanal (131) in Verbindung steht, der dritte Strömungskanal (141) vom zweiten Verbindungsteil (14) in Richtung weg vom Aufnahmeraum (70) zurückgesetzt ist, der zweite Verbindungsteil (14) mit einer zweiten Öffnung (143) versehen ist und die zweite Öffnung (143) mit dem dritten Strömungskanal (141) verbunden ist;
der dritte Verbindungsteil (32) mit einer dritten Öffnung (321) versehen ist, und die dritte Öffnung (321) der ersten Öffnung (121) entspricht; und
der vierte Verbindungsteil (34) mit einem vierten Strömungskanal (341) versehen ist, der mit dem dritten Unterströmungskanal (331) in Verbindung steht, der vierte Strömungskanal (341) vom vierten Verbindungsteil (34) in Richtung des Aufnahmeraums (70) zurückgesetzt ist, der vierte Strömungskanal (341) dem dritten Strömungskanal (141) entspricht, wobei das erste Durchgangsloch (60), die erste Öffnung (121) und die dritte Öffnung (321) gemeinsam so konfiguriert sind, dass sie eines von dem Flüssigkeitseinlassrohr (20) und dem Flüssigkeitsauslassrohr (40) verbinden, und die zweite Öffnung (143) so konfiguriert ist, dass sie das andere von dem Flüssigkeitseinlassrohr (20) und dem Flüssigkeitsauslassrohr (40) verbindet.

8. Batteriepack (1000), umfassend:
mindestens ein Batteriemodul (300); und
die Flüssigkeitskühlplatte (100) gemäß einem der Ansprüche 1 bis 7, wobei die Flüssigkeitskühlplatte (100) so konfiguriert ist, dass sie einen Wärmeaustausch mit dem mindestens einen Batteriemodul (300) durchführt.

9. Batteriepack (1000) gemäß Anspruch 8, wobei das Batteriepack (1000) eine Vielzahl von Batteriemodulen (300) umfasst und sich die Flüssigkeitskühlplatte (100) zwischen den mehreren Batteriemodulen (300) befindet.

## Revendications

1. Une plaque de refroidissement de liquide (100), formée avec un espace de réception (70) et comprenant :
une première plaque de refroidissement (10) ; et
une deuxième plaque de refroidissement (30) qui est empilée sur un côté de la première plaque de refroidissement (10) faisant face à l'espace de réception (70) et qui est reliée à la première plaque de refroidissement (10) de manière étanche, dans laquelle un passage d'écoulement de refroidissement (50) entourant l'espace de réception (70) est formé entre la première plaque de refroidissement (10) et la deuxième plaque de refroidissement (30), dans lequel la première plaque de refroidissement (10) comprend un premier corps (11) et un premier passage d'écoulement (13) prévu dans le premier corps (11), et le premier passage d'écoulement (13) s'étend dans un sens de longueur du premier corps (11) et est en retrait par rapport au premier corps (11) dans une direction s'éloignant de l'espace de réception (70), dans lequel la deuxième plaque de refroidissement (30) comprend un deuxième corps (31) et un deuxième passage d'écoulement (33) prévu dans le deuxième corps (31), le deuxième corps (31) étant empilé sur un côté du premier corps (11) faisant face à l'espace de réception (70), et le deuxième passage d'écoulement s'étendant dans un sens de longueur du deuxième corps (31) et étant en retrait par rapport au deuxième corps (31) dans une direction vers l'espace de réception (70),
dans lequel, dans un cas où le premier corps (11) de la première plaque de refroidissement (10) est pourvu du premier passage d'écoulement (13) et le deuxième corps (31) de la deuxième plaque de refroidissement (30) est pourvu du deuxième passage d'écoulement (33), le deuxième passage d'écoulement (33) correspond au premier passage d'écoulement (13), le premier corps (11) est relié au deuxième corps (31) de manière étanche, et le deuxième passage d'écoulement (33) et le premier passage d'écoulement (13) sont adaptés pour former conjointement le passage d'écoulement de refroidissement (50) entourant l'espace de réception (70),
dans lequel le premier corps (11) comprend un premier segment (111), un deuxième segment (113) et un troisième segment (115), le premier segment (111), le deuxième segment (113) et le troisième segment (115) sont d'une structure intégrale, et deux extrémités du deuxième segment (115) sont respectivement reliées au premier segment (111) et au troisième segment (115) de manière courbée,
le deuxième corps (31) comprenant un quatrième segment (311), un cinquième segment (313) et un sixième segment (315), le quatrième segment (311), le cinquième segment (313) et le sixième segment (315) étant d'une structure intégrale, deux extrémités du cinquième segment (313) étant respectivement reliées au quatrième segment (311) et au sixième segment (315) de manière courbée, le quatrième segment (311) correspond et s'adapte au premier segment (111), le cinquième segment (313) correspond et s'adapte au deuxième segment (113), et le sixième segment (315) correspond et s'adapte au troisième segment (115),
dans lequel le premier passage d'écoulement (13) comprend un premier sous-passage d'écoulement (131) et un deuxième sous-passage d'écoulement (133) répartis dans le premier corps (11), le premier sous-passage d'écoulement (131) et le deuxième sous-passage d'écoulement (133) sont disposés côte à côte, le premier sous-passage d'écoulement (131) et le deuxième sous-passage d'écoulement (133) communiquant l'un avec l'autre, et le premier sous-passage d'écoulement (131) et le deuxième sous-passage d'écoulement (133) s'étendant à travers le premier segment (111), le deuxième segment (113) et le troisième segment (115) ;
dans lequel le deuxième passage d'écoulement (33) comprend un troisième sous-passage d'écoulement (331) et un quatrième sous-passage d'écoulement (333) répartis dans le deuxième corps (31), le troisième sous-passage d'écoulement (331) et le quatrième sous-passage d'écoulement sont disposés côte à côte, le troisième sous-passage d'écoulement (331) et le quatrième sous-passage d'écoulement (333) communiquant entre eux, le troisième sous-passage d'écoulement (331) et le quatrième sous-passage d'écoulement (333) s'étendant à travers le quatrième segment (311), le cinquième segment (313) et le sixième segment (315), le premier sous-passage d'écoulement (131) correspond au troisième sous-passage d'écoulement (331), et le deuxième sous-passage d'écoulement (133) correspond au quatrième sous-passage d'écoulement (333) ; et
dans lequel le passage d'écoulement de refroidissement (50) formé conjointement par le premier passage d'écoulement (13) et le deuxième passage d'écoulement (33) a une forme annulaire dans son ensemble.

2. Plaque de refroidissement de liquide (100) selon la revendication 1, dans laquelle la première plaque de refroidissement (10) comprend en outre une première partie d'écoulement turbulent (15) prévue dans le premier passage d'écoulement (13) dans une direction d'extension du premier passage d'écoulement (13), et la première partie d'écoulement turbulent (15) est formée en faisant saillie à partir d'une paroi latérale du premier passage d'écoulement (13) dans la direction vers l'espace de réception (70) ;
la deuxième plaque de refroidissement (30) comprend en outre une deuxième partie à écoulement turbulent (35) prévue dans le deuxième passage d'écoulement (33) dans une direction d'extension du deuxième passage d'écoulement (33), et la deuxième partie à écoulement turbulent (35) est formée en faisant saillie à partir du deuxième passage d'écoulement (33) dans la direction s'éloignant de l'espace de réception (70).

3. Plaque de refroidissement de liquide (100) selon la revendication 2, dans laquelle la deuxième partie à écoulement turbulent (35) et la première partie à écoulement turbulent (15) sont en contact direct l'une avec l'autre, ou la deuxième partie à écoulement turbulent (35) et la première partie à écoulement turbulent (15) sont disposées de manière décalée l'une par rapport à l'autre.

4. Plaque de refroidissement de liquide (100) selon la revendication 3, dans laquelle une profondeur à laquelle le premier passage d'écoulement (13) est en retrait est la même qu'une hauteur à laquelle la première partie d'écoulement turbulent (15) fait saillie ; et une profondeur à laquelle le deuxième passage d'écoulement (33) est en retrait est la même qu'une hauteur à laquelle la deuxième partie d'écoulement turbulent (35) fait saillie.

5. Plaque de refroidissement de liquide (100) selon la revendication 1, dans laquelle le deuxième segment (113) est muni d'un premier trou traversant (60) communiquant avec le premier sous-passage d'écoulement (131), et le deuxième segment (113) est muni d'un deuxième trou traversant (80) communiquant avec le deuxième sous-passage d'écoulement (133), le premier trou traversant (60) est configuré pour relier l'un parmi un tuyau d'entrée de liquide (20) et un tuyau de sortie de liquide (40), et le deuxième trou traversant (80) est configuré pour relier l'autre parmi le tuyau d'entrée de liquide (20) et le tuyau de sortie de liquide (40) ; ou
le cinquième segment (313) est muni du premier trou traversant (60) communiquant avec le troisième sous-passage d'écoulement (331), et le cinquième segment (313) est muni du deuxième trou traversant (80) communiquant avec le quatrième sous-passage d'écoulement (333), le premier trou traversant (60) est configuré pour relier l'un des tuyaux d'entrée de liquide (20) et de sortie de liquide (40), et le deuxième trou traversant (80) est configuré pour relier l'autre des tuyaux d'entrée de liquide (20) et de sortie de liquide (40).

6. Plaque de refroidissement de liquide (100) selon la revendication 5, dans laquelle la première plaque de refroidissement (10) comprend en outre une première partie de connexion (12) et une deuxième partie de connexion (14) qui sont prévues sur le deuxième segment (113), et la deuxième plaque de refroidissement (30) comprend en outre une troisième partie de connexion (32) et une quatrième partie de connexion (34) qui sont prévues sur le cinquième segment (313), la première partie de connexion (12) est adaptée à la troisième partie de connexion (32), et la deuxième partie de connexion (14) est adaptée à la quatrième partie de connexion (34).

7. La plaque de refroidissement de liquide (100) selon la revendication 6, dans laquelle le cinquième segment (313) est muni d'un premier trou traversant (60) communiquant avec le quatrième sous-passage d'écoulement (333), et la première partie de connexion (12) est munie d'une première ouverture (121) ;
la deuxième partie de connexion (14) est pourvue d'un troisième passage d'écoulement (141) communiquant avec le premier sous-passage d'écoulement (131), le troisième passage d'écoulement (141) est en retrait par rapport à la deuxième partie de connexion (14) dans la direction s'éloignant de l'espace de réception (70), la deuxième partie de connexion (14) est pourvue d'une deuxième ouverture (143), et la deuxième ouverture (143) est reliée au troisième passage d'écoulement (141) ;
la troisième partie de connexion (32) est pourvue d'une troisième ouverture (321), et la troisième ouverture (321) correspond à la première ouverture (121) ; et
la quatrième partie de raccordement (34) est pourvue d'un quatrième passage d'écoulement (341) communiquant avec le troisième sous-passage d'écoulement (331), le quatrième passage d'écoulement (341) est en retrait par rapport à la quatrième partie de raccordement (34) dans la direction de l'espace de réception (70), le quatrième passage d'écoulement (341) correspond au troisième passage d'écoulement (141), dans lequel le premier trou traversant (60), la première ouverture (121) et la troisième ouverture (321) sont configurés conjointement pour raccorder l'un parmi le tuyau d'entrée de liquide (20) et le tuyau de sortie de liquide (40), et la deuxième ouverture (143) est configurée pour raccorder l'autre parmi le tuyau d'entrée de liquide (20) et le tuyau de sortie de liquide (40).

8. Un bloc-batterie (1000), comprenant :
au moins un module de batterie (300) ; et
la plaque de refroidissement de liquide (100) selon l'une quelconque des revendications 1 à 7, dans laquelle la plaque de refroidissement de liquide (100)' est configurée pour effectuer un échange thermique avec l'au moins un module de batterie (300).

9. Le bloc-batterie (1000) selon la revendication 8, dans lequel le bloc-batterie (1000) comprend une pluralité de modules de batterie (300), et la plaque de refroidissement de liquide (100) est disposée entre la pluralité de modules de batterie (300).
